# EUROPEAN PATENT APPLICATION

(11) **EP 4 510 436 A1**
(43) Date of publication of application: **19.02.2025**
(21) Application number: 22937575.3
(22) Date of filing: 22.11.2022
(51) Int. Cl.: H02M 7/00, H02M 3/00, H02M 5/40, H01F 27/02, H01F 27/08, H01F 30/06, H01F 38/04

(54) **SUB-MODULE FOR SINGLE PACKAGING TYPE SEMICONDUCTOR TRANSFORMER WITH EXCELLENT INSULATION AND INDUCTION HEATING PREVENTION PERFORMANCE**

(30) Priority: 13.04.2022 KR 20220045975
(71) Applicant: Hyosung Heavy Industries Corporation, Seoul 04144 (KR)
(72) Inventor: SEO, Hae Won, Seoul 03789 (KR); KIM, Sung Joo, Goyang-si, Gyeonggi-do 10218 (KR); JEONG, Byung Hwan, Gwacheon-si, Gyeonggi-do 13835 (KR)
(74) Representative: Viering, Jentschura & Partner mbB Patent- und Rechtsanwälte
(86) International application number: PCT/KR2022/018527
(87) International publication number: WO 2023/200062

(57) **Abstract**

The present invention relates to a submodule for a semiconductor transformer in single packaging with excellent performance of insulation and prevention against induction heating that is capable of preventing induction heating caused by a magnetic field generated from coils by being equipped with a shield with at least specified conductivity in the semiconductor transformer while improving insulation performance by securing separation distance between a high voltage unit and a low voltage unit in the semiconductor transformer.

The submodule for the semiconductor transformer in single packaging with excellent performance of insulation and prevention against induction heating in accordance with the present invention comprises: a high voltage unit for converting high-voltage low-frequency AC power into high-voltage AC power; a transforming unit for converting the high-voltage AC power into low-voltage AC power; and a low voltage unit for converting the low-voltage AC power into low-voltage DC power.

## Description

### FIELD OF THE INVENTION

The present invention relates to a submodule for a semiconductor transformer in single packaging with excellent performance of insulation and prevention against induction heating, and more particularly, to the submodule for the semiconductor transformer in single packaging with excellent performance of insulation and prevention against induction heating that is capable of preventing induction heating generated in the semiconductor transformer while improving insulation performance between a high voltage unit and a low voltage unit in the semiconductor transformer.

### BACKGROUND OF THE INVENTION

In general, to charge electric vehicle batteries, the voltage of 60Hz/22.9kV is lowered by using a transformer, and converted to a certain amount of DC voltage by using AC/DC converters. The transformer and the AC/DC converters are components that take up a lot of load, and are required to become lighter.

Particularly, since a main transformer works at 60Hz low frequency, and such low-frequency transformer is heavy and bulky, it has relatively low power density.

To improve this, a lot of researches have been carried out to reduce the weight of transformers and AC/DC converters that work at commercial frequencies, of which one is to reduce the volume and weight of the transformers by using semiconductor devices and increasing the operating frequencies of the transformers from 60Hz to much higher frequencies such as several kHz to tens of kHz.

As such, a device that converts input low-frequency and high-voltage electrical power into high-frequency power by using a semiconductor device and then converts into DC voltage through a medium frequency transformer (MFT) is called a solid-state transformer (SST) or intelligent transformer, and compared to the existing low-frequency transformers, its importance is emerging due to its advantages such as reduced system size, power quality compensation, unit power factors, etc.

Meanwhile, if high voltage of 22.9kV is applied, the existing low-frequency transformers may cause a problem of insulation problem between a primary winding and a secondary winding. For the purpose of the insulation between the primary winding and the secondary winding, the two are separated, and an insulation structure is placed therebetween, with insulating oil filled. Therefore, commercial frequency transformers have disadvantages of increased weight and volume.

The insulation problem occurs even when the existing commercial frequency transformers are replaced with semiconductor transformers. In other words, the MFT used for semiconductor transformers has the same problem because it also uses the existing transformer structure as it is. At the same time, efforts to solving an insulation problem between components of a high voltage unit and those of a low voltage unit have been continued.

For an example, Korean Patent Laid-Open Publication No. 10-2020-0048376 proposed a submodule for a modular multilevel converter that comprises: a first housing in which a capacitor is installed, and a second housing in which the other components including an IGBT switch are installed; wherein the attachable or detachable first housing is installed on a side of the second housing in a hot-swap way to make maintenance, including replacement of a submodule capacitor, easier, and at the same time, wherein enough insulation strength between the submodule capacitor and the submodule controller is secured.

However, even in this case, there is a disadvantage difficult to overcome the temperature rising due to induction heating occurring from coils in a low voltage side. As coils in a semiconductor transformer are operated in a high frequency band, an induction-heating phenomenon is caused in surrounding structures by a generated magnetic field, and accordingly, the problem of the temperature rising in the semiconductor transformer occurs.

### DETAILED EXPLANATION OF THE INVENTION

### OBJECTS OF THE INVENTION

An object of the present invention is to provide a submodule for a semiconductor transformer in single packaging with excellent performance of insulation and prevention against induction heating by securing separation distance between a high voltage unit and a low voltage unit in the semiconductor transformer.

The other object of the present invention is to provide a submodule for a semiconductor transformer in single packaging with excellent performance of insulation and prevention against induction heating that prevents induction heating caused by magnetic field generated from coils by applying a shield with at least specified conductivity in the semiconductor transformer. with at least specified conductivity

### MEANS OF SOLVING THE PROBLEM

A submodule for a semiconductor transformer in single packaging with excellent performance of insulation and prevention against induction heating in accordance with the present invention may comprise: a high voltage unit for matching high-voltage low-frequency AC power and converting the power into high-voltage AC power; a transforming unit for converting the high-voltage AC power into low-voltage AC power; and a low voltage unit for converting the low-voltage AC power into low-voltage DC power.

Herein, the transforming unit may have a partition wall of the high voltage unit and a partition wall of the low voltage unit removed.

In addition, the transforming unit may be placed between the high voltage unit and the low voltage unit by changing its size, in a structure easy to change its size, depending on voltage used in the high voltage unit and the low voltage unit, or depending on potential difference between the high voltage unit and the low voltage unit.

Herein, the transforming unit may be placed between the high voltage unit and the low voltage unit by changing its size, in a structure easy to change the size, depending on physical constraints such as size of a transformer used in the transforming unit.

Furthermore, the transforming unit may be encompassed by an enclosure made of epoxy glass.

Herein, a side cover of the transforming unit may have vent holes to dissipate heat generated from the transformer outside.

Moreover, a side cover of the transforming unit near a side of the high voltage unit does not have vent holes.

Herein, the low voltage unit may include: an inductor for matching the low voltage AC power; and a shield which surrounds the inductor by placing apart from the inductor in at least a specific distance; and may be made of a conductor with at least specified conductivity.

Moreover, the specific distance may be 10 mm or more.

Herein, the specified conductivity may be conductivity of aluminum.

### EFFECTS OF THE INVENTION

A submodule for a semiconductor transformer in single packaging with excellent performance of insulation and prevention against induction heating in accordance with the present invention has an advantage of improving insulation performance by securing separation distance between a high voltage unit and a low voltage unit in the semiconductor transformer.

In addition, the submodule for the semiconductor transformer in single packaging with excellent performance of insulation and prevention against induction heating in accordance with the present invention has an advantage of preventing induction heating caused by magnetic field generated from coils in the semiconductor transformer.

### BRIEF DESCRIPTION OF THE DRAWINGS

Fig. 1 is a perspective view illustrating a submodule for a semiconductor transformer in single packaging with excellent performance of insulation and prevention against induction heating in accordance with an example embodiment of the present invention.
Fig. 2 is a perspective view illustrating a configuration of a high voltage unit, a transforming unit, and a low voltage unit in Fig. 1.
Fig. 3 is a test result showing an induction-heating phenomenon of an inductor and a shield in Fig. 2.

### DETAILED DESCRIPTION OF THE PREFERRED EMBODIMENTS

Detailed examples of embodiments to implement the present invention are explained by referring to attached drawings.

The present invention may have various changes, and several examples of embodiments, and therefore, it is intended that specific example embodiments are exemplified in drawings, and detailed explanations are given more specifically. This is not intended to limit the present invention to specific forms of embodiments, and it may be understood that this includes all changes, equivalents, and substitutes in the spirit and technical scope of the present invention.

Below is explanation of a submodule for a semiconductor transformer in single packaging with excellent performance of insulation and prevention against induction heating in accordance with the present invention by referring to the attached drawings.

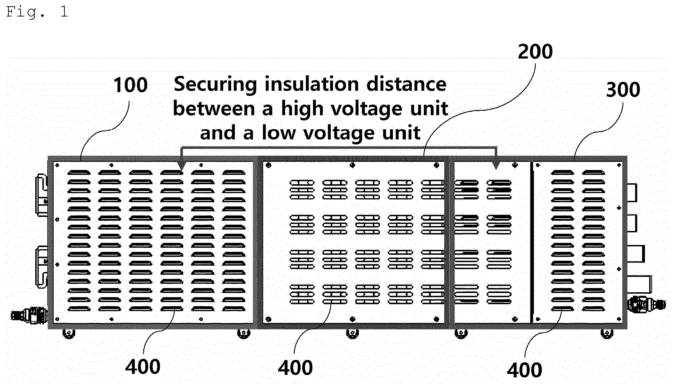

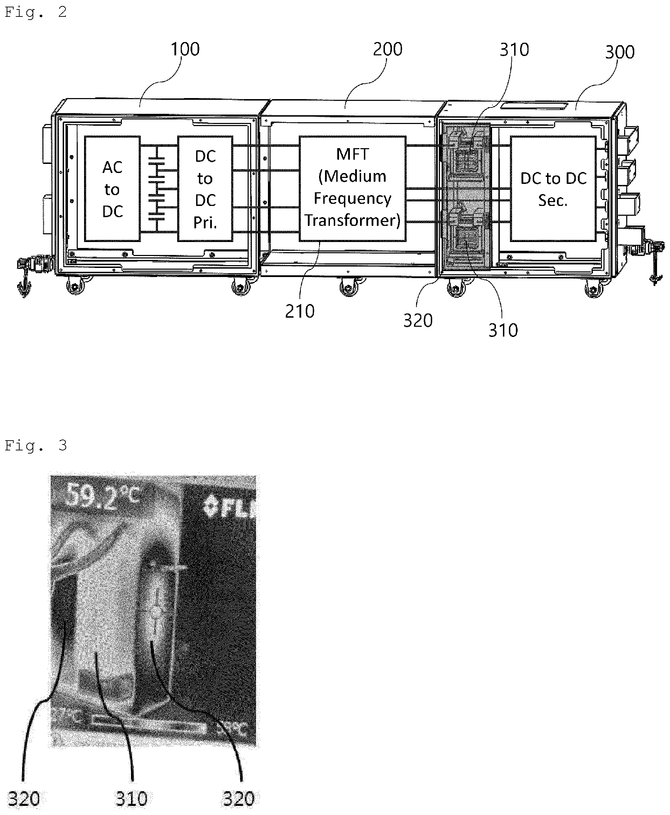

Fig. 1 is a perspective view illustrating the submodule for the semiconductor transformer in single packaging with excellent performance of insulation and prevention against induction heating in accordance with an example embodiment of the present invention, and Figs. 2 and 3, respectively, are a detailed perspective view, and a test result to explain Fig. 1 in detail.

By referring to Figs. 1 through 3, the submodule for the semiconductor transformer in single packaging with excellent performance of insulation and prevention against induction heating in accordance with one example embodiment of the present invention is explained.

First, by referring to Fig. 1, the submodule for the semiconductor transformer in single packaging with excellent performance of insulation and prevention against induction heating in accordance with one example embodiment of the present invention comprises: a high voltage unit 100 for matching high-voltage low-frequency AC power and converting the power into high-voltage AC power; a transforming unit (Medium Frequency Transformer; MFT) 200 for converting the high-voltage AC power into low-voltage AC power; and a low voltage unit 300 for converting the low-voltage AC power into low-voltage DC power.

In general, a semiconductor transformer which inputs AC 22.9kV grid line voltage requires design of a submodule structure considering equipment/electrical insulation to secure high insulation performance.

In center of the transforming unit 200, the submodule for the semiconductor transformer in accordance with the present invention is configured to have the high voltage unit 100 and the low voltage unit 300 in an insulated form, and respective enclosures for the high voltage unit 100, the transforming unit 200, and the low voltage unit 300 are in a packaging structure where they are connected in series.

Herein, the transforming unit 200 is placed between the high voltage unit 100 and the low voltage unit 300 by changing its size depending on voltage used in the high voltage unit 100 and the low voltage unit 300, or depending on potential difference between the high voltage unit 100 and the low voltage unit 300. Besides, the transforming unit 200 is placed between the high voltage unit 100 and the low voltage unit 300 by changing its size in a structure easy to change the size depending on physical constraints such as a transformer used for the transforming unit 200.

In other words, the present invention has an advantage of being capable of easily widening separation distance between the high voltage unit 100 and the low voltage unit 300 by adjusting the size of the transforming unit 200, and improving insulation performance by securing the separation distance and creepage distance in the air through this.

At the time, if voltage used at the high voltage unit 100 is relatively larger than voltage used at the low voltage unit 300 depending on voltage used at the high voltage unit 100 and the low voltage unit 300, the size of the transforming unit 200 may be changed to be large, and if the size of the transformer is smaller, separation distance of the high voltage unit 100 and the transforming unit 200 may be changed to be smaller by making the transforming unit 200 get physically smaller.

In addition, enclosures of the high voltage unit 100, the transforming unit 200, and low voltage unit 300 in accordance with the present invention may have vent holes 400 to dissipate internally generated heat to outside.

At the time, even side covers of the transforming unit 200 have vent holes, but in accordance with the example embodiment, the side cover of the transforming unit 200 near a side of the high voltage unit 100 does not have vent holes. As such, as the side cover of the transforming unit 200 does not have vent holes 400 near the side of the high voltage unit 100, this brings the effect of further improving insulation performance between the high voltage unit 100 and the low voltage unit 300.

Like this, the submodule for the semiconductor transformer in single packaging with excellent performance of insulation and prevention against induction heating in accordance with the present invention may change the separation distance between the high voltage unit 100 and the low voltage unit 300 easily depending on voltage used at the high voltage unit 100 and the low voltage unit 300, and the size of the transformer. Therefore, it has an advantage of maintaining the insulation performance between the high voltage unit 100 and the low voltage unit 300, and at the same time, being configured at an optimal size.

Fig. 2 is a perspective view illustrating a configuration of the high voltage unit 100, the transforming unit 200, and the low voltage unit 300 in Fig. 1.

As can be shown in Fig. 2, the transforming unit 200 in accordance with the present invention has a partition wall of the high voltage unit 100 and a partition wall of the low voltage unit 300 removed.

The present invention has the effect of improving insulation performance by removing the partition wall between the transforming unit 200 and the high voltage unit 100 and the partition wall between the transforming unit 200 and the low voltage unit 300.

By removing the partition walls and rearranging components, it is possible to reduce the distance by around 20 mm between the high voltage unit 100 and the transforming unit 200, and also to reduce the distance by around 20 mm between the transforming unit 200 and the low voltage unit 300 to minimize the size of the submodule.

At the same time, as a result of a test, while insulation performance was 200 [pC] or less at 25kV before the partitions were removed, the insulation performance was same at 48kV after the partitions were removed. The present invention brings the effect of improving insulation performance by removing the partitions.

In addition, the transforming unit 200 in the present invention is encompassed by an enclosure made of epoxy glass as a material with excellent insulation and flame-retardant performance. Through this, the present invention improves insulation performance while securing separation distance and creepage distance in the air between the high voltage unit 100 and the low voltage unit 300.

Meanwhile, the low voltage unit 300 of the submodule for the semiconductor transformer generally has an induction-heating phenomenon in a structure around a magnetic component by a magnetic field generated from the magnetic component, thus causing temperature in the submodule to rise. To prevent this, structural design is required.

To prevent temperature from rising due to induction heating in a structure within the low voltage unit 300 caused by a magnetic field generated by an inductor 310 for matching the low-temperature AC power of the low voltage unit 300, the present invention has a shield 320 surrounding the inductor 310 being spaced out by at least 10 mm from the inductor 310.

Herein, when the shield 320 is installed close to the inductor 310, induction heating in the shield 320 is generated a lot. Therefore, the shield should be installed to be spaced out by at least a specific distance, and more desirably by at least 10 mm.

Moreover, the present invention uses a conductor with conductivity which is equal to, or higher than, that of aluminum as a material of the shield 320. In other words, the shield 320 should have a conductor with at least specified conductivity that may generate eddy currents caused by a magnetic field so that the magnetic field is not affected to outside, and the present invention uses the conductor based on aluminum.

While the shield 320 covers all up, down, left, and right sides of the inductor 310, front and back sides are left open to connect bus bars.

As seen above, the submodule for the semiconductor transformer in single packaging with excellent performance of insulation and prevention against induction heating in accordance with the present invention has the shield 320 near the inductor 310 to minimize induction heating caused by a magnetic field generated from the inductor 310, and this may prevent temperature from rising in the low voltage unit 300 by removing the induction-heating phenomenon for the structure near the low voltage unit 300.

Fig. 3 is a test result showing an induction-heating phenomenon of the inductor 310 and the shield 320 in Fig. 2. As can be seen in Fig. 3, it can be identified that the magnetic field generated from the inductor 310 by placing the shield 320 near the inductor 310 creates the induction-heating phenomenon to the shield 320, and at the same time, the shield 320 blocks the magnetic field outside.

Accordingly, the submodule for the semiconductor transformer in single packaging with excellent performance of insulation and prevention against induction heating in accordance with the present invention that is equipped with the shield 320 near the inductor 310 has an advantage of preventing temperature from rising within the low voltage unit 300 by removing the induction-heating phenomenon to the structure near the low voltage unit 300.

As seen above, the submodule for the semiconductor transformer in single packaging with excellent performance of insulation and prevention against induction heating in accordance with the present invention may prevent induction heating caused by the magnetic field generated from coils by being equipped with the shield with at least specified conductivity in the semiconductor transformer while improving insulation performance by securing separation distance between the high-voltage unit and the low-voltage unit in the semiconductor transformer.

The above-mentioned example embodiments are included in one or more examples of embodiments. Of course, it may be recognized that they cannot describe all possible combinations of components or methods for the purpose of explaining aforementioned example embodiments but they may be added or replaced with a lot of additional combinations of various example embodiments by those skilled in the art. Accordingly, the explained example embodiments include all alternatives, modifications, and alternations within the intention and scope of what is claimed as attached below.

### Industrial Availability

The present invention relates to a submodule for a semiconductor transformer in single packaging with excellent performance of insulation and prevention against induction heating, which is available in a field of semiconductor transformer.

## Claims

1. A submodule for a semiconductor transformer in single packaging with excellent performance of insulation and prevention against induction heating, comprising:
a high voltage unit for matching high-voltage low-frequency AC power and converting the power into high-voltage AC power;
a transforming unit for converting the high-voltage AC power into low-voltage AC power; and
a low voltage unit for converting the low-voltage AC power into low-voltage DC power.

2. The submodule of Claim 1, wherein the transforming unit has a partition wall of the high voltage unit and a partition wall of the low voltage unit removed.

3. The submodule of Claim 1, wherein the transforming unit is placed between the high voltage unit and the low voltage unit by changing its size depending on voltage used in the high voltage unit and the low voltage unit or depending on potential difference between the high voltage unit and the low voltage unit.

4. The submodule of Claim 1, wherein the transforming unit is placed between the high voltage unit and the low voltage unit by changing its size in a structure easy to change the size depending on physical constraints such as size of a transformer used in the transforming unit.

5. The submodule of Claim 1, wherein the transforming unit is encompassed by an enclosure made of epoxy glass.

6. The submodule of Claim 5, wherein a side cover of the transforming unit has vent holes.

7. The submodule of Claim 5, wherein a side cover of the transforming unit near a side of the high voltage unit does not have vent holes.

8. The submodule of Claim 1, wherein the low voltage unit includes: an inductor for matching the low voltage AC power; and a shield which surrounds the inductor by placing apart from the inductor in at least specific distance, and is made of a conductor with at least specified conductivity.

9. The submodule of Claim 8, wherein the specific distance is 10 mm or more.

10. The submodule of Claim 8, wherein the specified conductivity is conductivity of aluminum.
